(19) Europäisches Patentamt
European Patent Office
Office européen des brevets

(11) **EP 2 956 764 B1**

(12) **FASCICULE DE BREVET EUROPEEN**

(45) Date de publication et mention
de la délivrance du brevet:
**12.08.2020 Bulletin 2020/33**

(21) Numéro de dépôt: **14701225.6**

(22) Date de dépôt: **24.01.2014**

(51) Int Cl.:
*G01N 27/414* (2006.01)  *G01N 27/416* (2006.01)

(86) Numéro de dépôt international:
**PCT/EP2014/051454**

(87) Numéro de publication internationale:
**WO 2014/114773 (31.07.2014 Gazette 2014/31)**

(54) **DISPOSITIF DE MESURE DE LA VALEUR DU PH COMPRENANT DES MOYENS DE CALIBRAGE IN SITU**

PH-WERT-MESSVORRICHTUNG MIT EINEM IN-SITU-KALIBRIERMITTEL

PH VALUE MEASURING DEVICE COMPRISING IN SITU CALIBRATION MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.01.2013 FR 1350666**

(43) Date de publication de la demande:
**23.12.2015 Bulletin 2015/52**

(73) Titulaire: **VEOLIA EAU - COMPAGNIE GENERALE DES EAUX**
**92000 Nanterre (FR)**

(72) Inventeurs:
• **DE COULON, Yves**
**2075 Thielle-Wavre (CH)**
• **BÉRIET, Carine**
**2034 Peseux (CH)**
• **LEMOINE, Cyrille**
**78500 Sartrouville (FR)**

(74) Mandataire: **Vidon Brevets & Stratégie**
**16B, rue de Jouanet**
**BP 90333**
**35703 Rennes Cedex 7 (FR)**

(56) Documents cités:
**US-A- 4 839 000    US-A- 5 016 201**
**US-A- 5 385 659    US-A- 5 911 873**

• **VAN DER SCHOOT B ET AL: "An ISFET-based microlitre titrator: integration of a chemical sensor-actuator system", SENSORS AND ACTUATORS, ELSEVIER, SWITZERLAND, vol. 8, no. 1, 1 septembre 1985 (1985-09-01), pages 11-22, XP026555589, ISSN: 0250-6874, DOI: 10.1016/0250-6874(85)80020-2 [extrait le 1985-09-01]**

**Description**

**1. Domaine de l'invention**

Le domaine de l'invention est celui des techniques de mesure de la valeur du pH d'un effluent liquide.
Plus précisément, l'invention concerne la conception et la fabrication de sondes et les procédés de mesure en continu de la valeur du pH d'un effluent liquide.

**2. Art antérieur**

Le potentiel d'hydrogène, plus couramment appelé pH, représente l'activité chimique des ions hydrogène en solution. La valeur du pH d'une solution révèle son acidité ou sa basicité.
Le pH est un paramètre utilisé dans de nombreuses applications.
Le pH est par exemple utilisé dans le domaine du traitement de l'eau où il se révèle être, par exemple, un indicateur du bon état biologique d'une eau. Il est aussi souvent utilisé en tant que paramètre de contrôle lors de la mise en œuvre de procédés de traitement d'eau.
Le pH est également souvent utilisé dans le domaine de la microbiologie dans la mesure où sa valeur gouverne les réactions enzymatiques et la croissance des bactéries.
Le pH est également utilisé dans le domaine pharmaceutique et médical dans la mesure où d'infimes variations de pH peuvent être symptomatiques de troubles métaboliques graves.
Il existe de nombreuses techniques de mesure de la valeur du pH d'une solution. Au rang de celles-ci figurent notamment :

- le papier pH dont la couleur varie, lorsqu'il est mis en contact avec une solution, en fonction de la valeur du pH de celle-ci ;
- les sondes à électrode de verre ;
- les sondes sans électrode de verre.

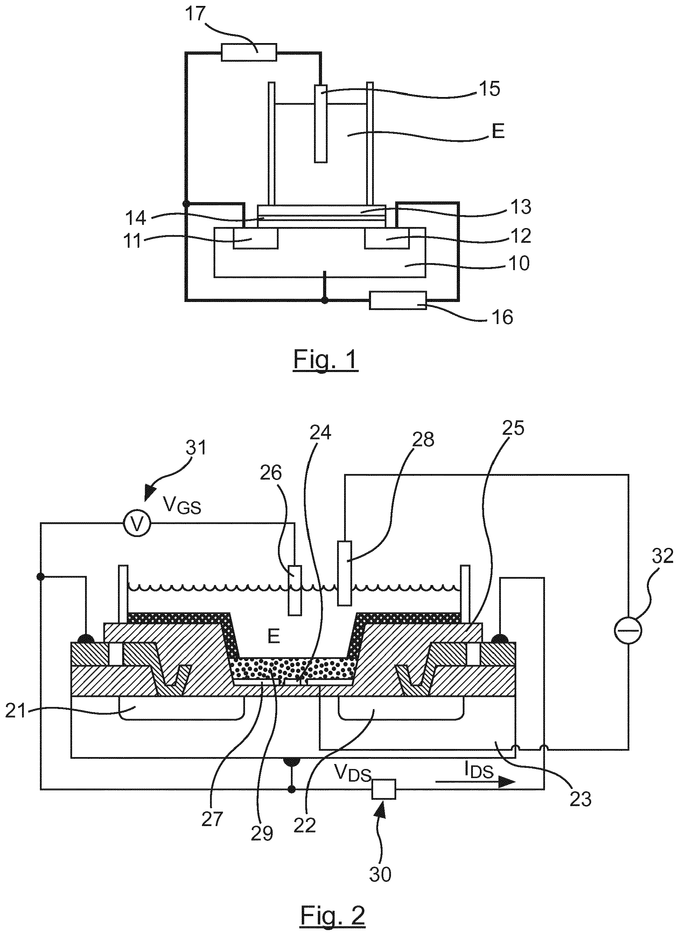

Seules les sondes à électrode de verre ou sans électrode de verre conviennent pour la réalisation d'une mesure en continu du pH d'une solution.
Les sondes à électrode de verre sont relativement fragiles et nécessitent la mise en œuvre d'opérations de maintenance selon une fréquence hebdomadaire ou journalière notamment du fait que l'électrode de verre contient un électrolyte qui constitue un consommable. Cet inconvénient peut être réduit par l'utilisation d'électrolyte sous forme de gel sans pour autant être complètement obvié. Par ailleurs, le stockage des électrodes de verre suppose le respect de conditions particulières et contraignantes. En effet, les électrodes de verre doivent être stockées dans des solutions de chlorure de potassium, un stockage à sec induisant un vieillissement prématuré.
Le document US 5 016 201 A décrit un dispositif de mesure du pH d'un effluent. Le dispositif comprend une sonde de pH à électrode de verre mis en contact avec l'effluent. Une des électrodes reliées à une source de courant électrique est disposée à proximité de la sonde pH. Afin de calibrer la sonde pH, le pH de l'effluent est modifié localement par un courant circulant de ladite électrode vers l'effluent au voisinage de la sonde.
Les sondes sans électrode de verre ont notamment été développées afin de palier ces inconvénients.
L'invention concerne plus particulièrement, mais non exclusivement, les sondes de mesure du pH sans électrode de verre.
Ainsi que cela est représenté sur la figure 1, une sonde de mesure du pH sans électrode de verre comprend classiquement un transistor de type ISFET (pour « Ion-Sensitive Field Effect Transistor » en langue anglaise soit « transistor à effet de champs sensible aux ions ») et une électrode de référence 15.
Le transistor ISFET comprend un substrat 10 généralement en silicium sur lequel sont placées une source dopée 11, un drain dopé 12 et une grille 13 séparée de la source 11 et du drain 12 par un isolant 14.
La grille 13 présente une couche sensible aux variations de concentration en ions $H^+$.
Dans des variantes, l'électrode de référence 15 peut être constituée d'un transistor de type MOSFET (acronyme anglais de « Metal Oxide Semiconductor Field Effect Transistor » soit « transistor à effet de champ à structure métal-oxyde-semiconducteur »).
La couche sensible aux variations de concentration en ions $H^+$ ainsi que l'électrode de référence 15 sont destinées à être mises en contact avec la solution E dont il est souhaité de mesurer le pH.
La source 11 et le drain 12 sont reliés à un générateur de tension électrique et de courant électrique 16 capable de générer une différence de potentiel électrique et un courant électrique de valeurs constantes à leurs bornes.
L'électrode de référence 15 et la source 11 sont reliées à des moyens de mesure d'une différence de potentiel électrique dit de contrôle 17, comme un voltmètre, capable de mesurer une différence de potentiel électrique à leurs bornes. Dans la mesure où l'électrode de référence est reliée au contact de la grille, la tension mesurée par ce voltmètre est la tension $V_{GS}$ du transistor ISFET entre la grille et la source.

Afin de mesurer le pH d'une solution, celle-ci est mise au contact de la grille 13 et de l'électrode de référence 15.

Le générateur de courant et le générateur de tension 16 sont mis en œuvre pour générer le passage d'un courant constant et d'une tension électrique constante entre la source 11 et le drain 12. Les valeurs de cette tension et de ce courant sont stables et suffisamment élevées pour permettre de polariser le transistor.

La variation du pH de la solution à analyser induit la variation de son potentiel électrochimique qui modifie la tension $V_{GS}$ du transistor. Il y a une variation linéaire de la tension grille-source « $V_{GS}$ » en fonction du pH pour un courant drain-source $I_{DS}$ et une tension drain-source $V_{DS}$ constants. La différence de potentiel électrique $V_{GS}$ dite de contrôle est alors mesurée aux bornes de l'électrode de référence 15 et de la source 11. La mesure de cette différence de potentiel électrique permet donc de déterminer la valeur du pH de la solution.

Comparativement aux sondes à électrode de verre, les sondes à électrode ISFET sont plus résistantes, plus faciles à stocker dans la mesure où elles peuvent être stockées à sec, plus précises et plus rapides du fait qu'elles présentent un temps de réponse très court.

Les sondes à électrode ISFET, et plus généralement les sondes de mesure du pH peuvent toutefois encore être améliorées.

## 3. Inconvénients de l'art antérieur

Le principal inconvénient des sondes à électrode ISFET est lié au fait qu'on observe au cours du temps une dérive entre la valeur mesurée du pH et sa valeur réelle. Cette dérive impose de ré-étalonner régulièrement la sonde.

Afin de garantir que la mesure de pH réalisée au moyen de la sonde soit représentative de la réalité, la fréquence des réétalonnages est généralement journalière.

La fonction linéaire reliant le pH à la tension $V_{GS}$ mesurée par la sonde ISFET est :

$$V_{GS} = C_2.pH + E^0$$

où $C_2$ (coefficient directeur) et $E^0$ (ordonnée à l'origine) sont des constantes.

Les phases de réétalonnage consistent à démonter la sonde de manière à la placer alternativement dans des solutions ayant des valeurs de pH connues et différentes les unes des autres. La comparaison des valeurs de pH mesurées par la sonde aux valeurs réelles permet ensuite de corriger la valeur de la pente et/ou de l'ordonnée à l'origine de la courbe de pH de la sonde de façon telle que la valeur de pH mesurée avec la sonde soit identique la valeur réelle du pH de la solution analysée.

Ces réétalonnages nécessitent donc une main d'œuvre qualifiée, ce qui représente un poste de coût pouvant être important.

Ils nécessitent le démontage de la sonde ce qui peut être long et fastidieux dans la mesure où celle-ci n'est pas toujours très accessible.

En outre, les phases de réétalonnage imposent l'arrêt des procédés dans lesquels le pH est utilisé comme paramètre de contrôle. Ceci induit une baisse de productivité. Ainsi, dans certains procédés de traitement d'eau, les réétalonnages induisent une baisse de la production d'eau traitée.

## 4. Objectifs de l'invention

L'invention a notamment pour objectif de pallier ces inconvénients de l'art antérieur.

Plus précisément, un objectif de l'invention est de fournir une technique de mesure du pH qui permette de réduire, dans au moins un mode de réalisation, la fréquence des réétalonnages comparativement aux techniques de l'art antérieur.

Un autre objectif de l'invention est de mettre en œuvre une telle technique qui permette, dans au moins un mode de réalisation, de simplifier les réétalonnages.

Notamment, un objectif de l'invention est de procurer, dans au moins un mode de réalisation, une telle technique qui ne nécessite pas de démonter la sonde pour procéder à son réétalonnage.

Un autre objectif de l'invention est de procurer, dans au moins un mode de réalisation, une telle technique qui ne nécessite pas de mettre en contact la sonde avec diverses solutions de pH différents connus pour procéder à son réétalonnage.

L'invention a encore pour objectif de procurer une telle technique qui soit, dans au moins un mode de réalisation, simple à mettre en œuvre et/ou à stocker et/ou fiable et/ou robuste et/ou précise.

Un autre objectif de l'invention est de procurer, dans au moins un mode de réalisation, une telle technique qui ne nécessite pas l'utilisation de réactif tel qu'un électrolyte liquide ou sous forme de gel pour réaliser la mesure car celui-ci serait nécessairement à renouveler lors de la maintenance, comme ceci est le cas des électrodes de verre dont l'électrode de référence beigne dans un électrolyte.

**5. Exposé de l'invention**

Ces objectifs, ainsi que d'autres qui apparaîtront par la suite, sont atteints à l'aide d'un dispositif de mesure du pH d'un effluent selon la revendication 1.

Selon l'invention, un tel dispositif comprend en outre des moyens de modification de la valeur du pH dudit effluent à proximité desdits moyens de mesure.

Egalement selon l'invention, un tel dispositif comprend en outre des moyens de calibrage ou calibration dudit dispositif de mesure, lesdits moyens de calibrage étant configurés pour calibrer le dispositif de mesure après modification dudit pH dudit effluent à proximité desdits moyens de mesure par lesdits moyens de modification.

Ainsi, l'invention repose sur une approche tout à fait originale qui consiste à intégrer, dans une sonde de mesure du pH, des moyens pour modifier le pH de l'effluent localement, c'est-à-dire à proximité de la partie active de la sonde (éléments de la sonde en contact avec l'effluent au niveau desquels la mesure est réalisée).

Il est ainsi possible de modifier localement la valeur du pH de l'effluent de manière à procéder à la calibration de la sonde sans démonter celle-ci ni la plonger dans différentes solutions tampon de pH connu afin de calibrer le dispositif.

La technique selon l'invention permet ainsi réaliser une calibration in situe sans démontage de la sonde pH, et par conséquent de faciliter la calibration, de réduire le temps nécessaire à celle-ci, et de réduire le coût inhérent à celle-ci.

Selon une caractéristique préférentielle, lesdits moyens de mesure comprennent :

- un transistor de type ISFET comprenant une source et un drain disposés sur un substrat, et une grille destinée à être mise en contact avec ledit effluent ;
- une électrode de référence ;
- des moyens de génération d'une différence de potentiel électrique constante aux bornes de ladite source et dudit drain ;
- des deuxième moyens de génération d'un courant électrique constant entre ladite source et ledit drain ;
- des moyens de mesure d'une différence de potentiel électrique de contrôle $V_{GS}$ aux bornes de ladite source et de ladite électrode de référence,
- des moyens de détermination de la valeur du pH dudit effluent en fonction de la valeur de ladite différence de potentiel électrique de contrôle $V_{GS}$, la valeur de la différence de potentiel électrique de contrôle $V_{GS}$ et la valeur du pH étant préférentiellement liées par une formule du type :

$V_{GS} = C_2 \cdot pH + E^0$, où $E^0$ et $C_2$ sont des constantes prédéfinies ; lesdits moyens de calibrage étant préférentiellement configurés pour mettre en œuvre des phases ou étapes de calibrage ou calibration durant lesquelles :

- ils agissent sur lesdits moyens de modification de la valeur du pH pour la porter momentanément à au moins une première valeur connue $pH_1$, puis
- ils agissent sur lesdits moyens de mesure d'une différence de potentiel électrique de contrôle $V_{GS}$, pour en mesurer la valeur $V_{GS1}$ correspondante ;
- ils calculent la valeur de la constante $E^0$ en fonction des valeurs de $pH_1$ et de $V_{GS1}$.

Ainsi, l'invention repose, dans ce mode de réalisation, sur une approche tout à fait originale qui consiste à intégrer, dans une sonde de mesure du pH de type comprenant un transistor ISFET, des moyens pour modifier localement le pH de l'effluent et des moyens pour calibrer, in situ, le dispositif de mesure.

Pour mesurer le pH d'une solution, l'électrode de référence et la grille sont mises en contact avec celle-ci.

Lorsque la sonde est mise en contact avec l'effluent dont il est souhaité de mesurer le pH, les ions H⁺ que celui-ci contient modifient le potentiel électrochimique de la solution et donc la tension $V_{GS}$ de l'ISFET.

Des moyens de génération d'un courant électrique constant et d'une différence de potentiel électrique constante sont alors mis en œuvre pour générer un courant constant et une tension constante aux bornes de la source et du drain dont les valeurs sont choisies pour permettre de polariser le transistor ISFET.

La différence de potentiel électrique de contrôle $V_{GS}$ est alors mesurée aux bornes de la source et de la grille ou plus précisément de l'électrode de référence. La valeur de cette différence de potentiel électrique de contrôle varie en fonction du pH de l'effluent. Le pH de l'effluent est alors déterminé en fonction de la valeur de la différence de potentiel électrique de contrôle.

Afin d'éviter l'observation d'une dérive entre la valeur de pH mesurée au moyen de la sonde et la valeur de pH réelle, la sonde est régulièrement calibrée in situ. Pour cela, les moyens de calibrage agissent sur les moyens de modification du pH pour porter localement la valeur du pH de l'effluent à une valeur connue. Ils commandent ensuite la mesure de $V_{GS}$ puis calculent la valeur de $E^0$ qui est l'ordonnée à l'origine de la courbe de la tension $V_{GS}$ en fonction du pH.

Lesdits moyens de modification de la valeur du pH comprennent une anode et une cathode destinées à être mises en contact avec ledit effluent, et des premiers moyens de génération de courant électrique entre ladite anode et ladite cathode.

L'invention repose, dans ce cas, sur une approche tout à fait originale qui consiste à intégrer, dans une sonde de mesure du pH de type comprenant un transistor ISFET, une anode et une cathode prévues pour venir au contact de l'effluent à analyser, et des moyens de génération d'un courant électrique aux bornes de celles-ci.

Afin d'éviter l'observation d'une dérive entre la valeur de pH mesurée au moyen de la sonde et la valeur de pH réelle, la sonde est régulièrement calibrée in situ. Pour cela, un courant électrique est appliqué entre l'anode et la cathode. On génère ainsi la production de protons dans l'effluent à proximité des moyens de mesure, dans le cas d'un ISFET à proximité de la surface active de la grille, par oxydation de l'eau selon la formule $H_2O \rightarrow 2O_2 + 4H^+ + 4e^-$. Le pH de l'effluent peut ainsi être modifié localement de façon contrôlée.

En effet, en régulant la valeur du courant électrique entre l'anode et la cathode, il est possible de contrôler la valeur du pH à proximité de la partie active des moyens de mesure, dans le cas d'un ISFET à proximité de la surface active de la grille. On peut ainsi successivement placer le pH à une ou plusieurs valeurs connues différentes en vue de procéder au calibrage de la sonde.

La technique selon l'invention permet donc de procéder au calibrage, encore appelé réétalonnage, de la sonde de manière in situe, c'est-à-dire sans démonter celle-ci et sans influencer le milieu dans lequel la mesure est réalisée. En effet, la quantité d'ion $H^+$ généré est faible au regard du volume de liquide dans lequel est effectuée la mesure.

La technique selon l'invention concourt donc à faciliter le calibrage d'une sonde de mesure de pH de type comprenant un transistor ISFET et à réduire en conséquence le cout inhérent à celui-ci.

Ledit dispositif, par exemple lesdits moyens de modification du pH, comprend préférentiellement des moyens de commande pour mettre en œuvre ou non lesdits premier moyens de génération d'un courant électrique.

Dans ce cas, lesdits moyens de calibration sont préférentiellement configurés pour agir sur lesdits moyens de commandes pour mettre en œuvre lesdits premiers moyens de génération d'un courant électrique pour modifier la valeur du pH pendant lesdites phases de calibrage.

Ainsi, les premiers moyens de génération de courant pourront ne pas être mis en œuvre pour réaliser une mesure classique du pH, puis pourront être mis en œuvre pour modifier localement le pH avant d'effectuer de nouvelles mesures du pH dans le but de calibrer le dispositif.

Un dispositif selon l'invention comprend une membrane perméable aux ions $H^+$ recouvrant et étant en contact avec ladite anode et au moins en partie lesdits moyens de mesure, en particulier la partie active de ceux-ci.

Lorsque la sonde est mise en contact avec l'effluent dont il est souhaité de mesurer le pH, les ions $H^+$ que celui-ci contient diffusent à l'intérieur de la membrane afin d'atteindre un équilibre de concentration entre l'intérieur et l'extérieur de la membrane. La concentration en ion $H^+$ à l'intérieur de la membrane est donc identique à celle de l'effluent. La mesure du pH est donc effectuée à l'intérieur de la membrane. Lors de la calibration, le pH est modifié seulement à l'intérieur de la membrane, c'est-à-dire dans un volume restreint. On améliore ainsi notamment la précision du calibrage.

Lorsque le dispositif de mesure est du type comprenant un transistor de type ISFET, et qu'il comprend une membrane perméable aux ions $H^+$, cette membrane recouvre ladite grille et ladite anode, ladite grille et ladite anode étant en contact avec ladite membrane.

Lorsque la sonde est mise en contact avec l'effluent dont il est souhaité de mesurer le pH, les ions $H^+$ que celui-ci contient diffusent à l'intérieur de la membrane afin d'atteindre un équilibre de concentration entre l'intérieur et l'extérieur de la membrane. La concentration en ion $H^+$ à l'intérieur de la membrane est donc identique à celle de l'effluent. Un courant électrique constant et une tension électrique constante de valeurs suffisantes sont appliqués entre la source et le drain afin de polariser le transistor. Une différence de potentiel électrique de contrôle $V_{GS}$ est alors mesurée aux bornes de l'électrode de référence et de la source dont la valeur varie en fonction du pH de l'effluent. Le pH de l'effluent est alors déterminé en fonction de la valeur de la différence de potentiel électrique de contrôle.

Au cours d'un calibrage, un courant électrique est appliqué entre l'anode et la cathode. On génère ainsi la production de protons à l'intérieur de la membrane par oxydation de l'eau selon la formule $H_2O \rightarrow 2O_2 + 4H^+ + 4e^-$. Le pH de l'effluent peut ainsi être modifié localement, facilement et rapidement dans la membrane sans interférer avec le milieu extérieur. La membrane joue un rôle tampon entre le milieu extérieur et le capteur, les électrodes placées sous cette membrane permettant de modifier à volonté le pH autour du capteur.

La mise en œuvre de la membrane permet de ne faire varier la valeur du pH que dans celle-ci, c'est-à-dire dans un volume restreint. La valeur de la différence de potentiel électrique entre l'anode et la cathode génère une production constante de protons au sein de la membrane plus stable que lorsque la membrane n'est pas mise en œuvre. La fiabilité du dispositif et la précision du calibrage sont ainsi améliorés.

Ladite membrane est préférentiellement en polymère, comme par exemple du poly(2-hydroxyéthylméthacrylate).

L'utilisation d'un polymère, et notamment de Poly(2-hydroxyethylmethacrylate) permet de réaliser une membrane perméable aux ions H$^+$ dont la mise en œuvre permet d'obtenir de bons résultats en terme de maitrise de variation locale de pH.

Un dispositif selon l'invention comprend préférentiellement des moyens de calibration dudit dispositif à partir d'au moins une mesure de ladite différence de potentiel électrique de contrôle après mise en œuvre desdits premiers moyens de génération d'un courant électrique par lesdits moyens de commande.

Dans des variantes, ladite électrode de référence pourra comprendre un transistor de type MOSFET ou tout autre pseudo électrode de référence comme par exemple un fil d'argent chlorure d'argent, fil d'or...

Le transistor MOSFET assure la fonction de l'électrode de référence et la tension de contrôle mesurée, qui est proportionnelle au pH de la solution analysé, est la tension aux bornes des grilles du MOSFET et de l'ISFET. Dans ce cas, le MOSFET est complètement encapsulé. Seules la grille de l'ISFET ainsi que l'anode et la cathode sont en contact avec l'effluent à analyser.

Dans le cas de l'ISFET, l'électrode de référence sera destinée à être mise en contact avec l'effluent pour procéder à la mesure du pH.

L'invention concerne également un procédé de mesure du pH d'un effluent au moyen d'un dispositif selon l'une quelconque des variantes exposées ci-avant.

Un tel procédé comprend :

- une phase ou étape de mesure du pH avec lesdits moyens de mesure ;
- une étape de calibration comprenant outre l'étape précédente, au moins une étape de modification de la valeur du pH dudit effluent à proximité desdits moyens de mesure avec lesdits moyens de modification de la valeur du pH dudit effluent.

Plus précisément, un tel procédé comprend préférentiellement :

- une phase de mesure du pH avec lesdits moyens de mesure ;
- une étape de calibration comprenant au moins une étape de modification dudit pH dudit effluent à proximité desdits moyens de mesure par lesdits moyens de modification, et une étape de calibration dudit dispositif de mesure par lesdits moyens de calibrage.

Selon un premier mode de réalisation préférentiel, ladite étape de mesure du pH comprend :

- une étape de génération d'une différence de potentiel électrique constante aux bornes de ladite source et dudit drain ;
- une étape de génération d'un courant électrique constant aux bornes de ladite source et dudit drain ;
- une étape de mesure d'une différence de potentiel électrique de contrôle $V_{GS}$ aux bornes desdites source et électrode de référence ;
- une étape de détermination de la valeur dudit pH en fonction de la valeur de ladite différence de potentiel électrique de contrôle $V_{GS}$, la valeur de la différence de potentiel électrique de contrôle $V_{GS}$ et la valeur du pH étant préférentiellement liées par une formule du type : $V_{GS} = C_2 \cdot pH + E^0$, où $E^0$ et $C_2$ sont des constantes prédéfinies.

Ladite étape de calibration comprend préférentiellement au moins :

- une étape de modification dudit pH par lesdits moyens de modification de la valeur du pH pour la porter momentanément à une première valeur connue $pH_1$, puis
- une étape de mesure de la différence de potentiel électrique de contrôle correspondant $V_{GS1}$ par lesdits moyens de mesure d'une différence de potentiel électrique de contrôle ;
- une étape de calcul par lesdits moyens de calibrage de ladite constante $E^0$ en fonction des valeurs connue $pH_1$ et de $V_{GS1}$.

Dans ce cas, la calibration consiste à modifier la valeur de l'ordonnée à l'origine de la différence de potentiel électrique de contrôle $V_{GS}$ exprimée en fonction du pH.

Selon un deuxième mode de réalisation, ladite étape de calibrage comprend :

- une étape de modification dudit pH par lesdits moyens de modification de la valeur du pH pour la porter momentanément à une première valeur connue $pH_1$, puis
- une étape de mesure de la différence de potentiel électrique de contrôle $V_{GS1}$ par lesdits moyens de mesure d'une différence de potentiel électrique de contrôle $V_{GS}$, pour mesurer la valeur $V_{GS1}$ correspondant à la première valeur

$pH_1$, puis

- une étape de modification dudit pH par lesdits moyens de modification de la valeur du pH pour la porter momentanément à une deuxième valeur connue $pH_2$, puis
- une étape de mesure de la différence de potentiel électrique de contrôle $V_{GS2}$ par lesdits moyens de mesure d'une différence de potentiel électrique de contrôle $V_{GS}$, pour mesurer la valeur $V_{GS2}$ correspondant à la deuxième valeur $pH_2$ ;
- une étape de calcul par lesdits moyens de calibrage de la valeur desdites constantes $E^0$, $C_2$ en fonction des valeurs commues de $pH_1$, $pH_2$, $V_{GS1}$ et de $V_{GS2}$.

Dans ce cas, la calibration consiste à modifier la valeur de l'ordonnée à l'origine $E^0$ et le coefficient directeur $C_2$ de la différence de potentiel électrique de contrôle $V_{GS}$ exprimée en fonction du pH.

Dans des variantes de l'invention, ladite étape de calibration, notamment ladite étape de modification du pH, pourra comprendre une étape de génération d'un courant électrique constant entre lesdites anode et cathode.

Ladite ou lesdites étape de modification dudit pH pourront comprendre une étape de mise en œuvre desdits premiers moyens de génération d'un courant électrique.

Dans des variantes, ladite étape de calibration pourra être mise en œuvre selon une fréquence prédéterminée, préférentiellement de manière journalière. Ladite étape de mesure pourra être mise en œuvre en continu ou non. La mesure du pH sera bien évidemment stoppée lors du calibrage hormis la mesure de pH nécessaire au calibrage. La fréquence de mise en œuvre de la calibration pourra être réglable.

L'invention concerne également un élément de mesure de pH d'un dispositif selon l'une quelconque des variantes exposées ci-avant. Un tel élément comprend :

- un transistor de type ISFET comprenant une source et un drain disposés sur un substrat, et une grille destinée à être mise en contact avec ledit effluent ;
- une électrode de référence ;
- des moyens de connexion des moyens de génération d'une différence de potentiel électrique constante aux bornes de ladite source et dudit drain ;
- des moyens de connexion des deuxièmes moyens de génération d'un courant électrique constant aux bornes de ladite source et dudit drain ;
- des moyens de connexion des moyens de mesure d'une différence de potentielle électrique de contrôle aux bornes de ladite source et de ladite électrode de référence ;
- une anode;
- une cathode;
- des moyens de connexion des premiers moyens de génération d'un courant électrique entre lesdites anode et cathode.

## 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 illustre une sonde de mesure du pH selon l'art antérieur ;
- la figure 2 illustre une sonde de mesure du pH selon l'invention ;
- les figures 3 et 4 illustrent des courbes montrant l'évolution dans le temps de la valeur réelle du pH d'une solution, de la valeur du pH mesurée au moyen d'une sonde selon l'art antérieur et de la valeur du pH mesurée au moyen d'une sonde selon l'invention ;
- la figure 5 illustre le schéma d'une partie d'un circuit électrique d'une sonde selon l'invention dont l'électrode de référence est constituée d'un transistor MOSFET.

## 7. Description d'un mode de réalisation de l'invention

### 7.1. Rappel du principe général de l'invention

Le principe général de l'invention consiste à intégrer, dans une sonde de mesure du pH, des moyens pour modifier le pH de l'effluent localement, c'est-à-dire à proximité de la partie active de la sonde (éléments de la sonde en contact avec l'effluent au niveau desquels la mesure est réalisée).

Il est ainsi possible de modifier localement la valeur du pH de l'effluent de manière à procéder à la calibration de la sonde sans démonter celle-ci ni la plonger dans différentes solutions tampon de pH connu.

La technique selon l'invention permet ainsi réaliser une calibration in situe sans démontage de la sonde pH, et pas conséquent de faciliter la calibration, de réduire le temps nécessaire à celle-ci, et de réduire le coût inhérent à celle-ci.

Dans une variante, l'invention consiste à intégrer, dans une sonde de mesure du pH de type comprenant un transistor ISFET, une anode et une cathode destinées à être mises en contact avec l'effluent à analyser, et des moyens de génération d'un courant électrique aux bornes de celles-ci.

Pour mesurer le pH d'un effluent, la sonde est mise en contact avec celui-ci, une différence de potentiel électrique $V_{DS}$ constante est appliquée aux bornes du drain et de la source et un courant électrique $I_{DS}$ constant est mis en circulation entre celles-ci afin de polariser le transistor. On observe alors la génération d'une différence de potentiel électrique $V_{GS}$ aux bornes de la source et de la grille dont la valeur est proportionnelle à celle du pH de l'effluent. Cette différence de potentiel électrique est mesurée puis le pH de l'effluent est déterminé en fonction de la valeur de la différence de potentiel électrique mesurée.

Afin de calibrer régulièrement la sonde, un courant électrique est créé entre l'anode et la cathode. On génère ainsi la production de protons à proximité de la surface active de la grille afin de modifier localement le pH de l'effluent.

En régulant la valeur du courant électrique entre l'anode et la cathode, il est possible de contrôler la valeur locale du pH. On peut ainsi successivement placer localement le pH à une ou plusieurs valeurs connues différentes et ainsi procéder au calibrage de la sonde.

La technique selon l'invention concourt donc à faciliter le calibrage d'une sonde de mesure de pH de type comprenant un transistor ISFET et à réduire en conséquence le cout inhérent à celui-ci.

### 7.2. Exemple d'un mode de réalisation d'une sonde selon l'invention

### 7.2.1. Architecture

On présente, en relation avec la figure 2, un mode de réalisation d'un dispositif de mesure de pH selon l'invention, encore appelé sonde de mesure de pH.

Ainsi que cela est représenté sur cette figure 2, une telle sonde comprend un transistor de type ISFET. Ce transistor comprend classiquement une source 21 et un drain 22 disposées sur un substrat 23. Classiquement, le drain et la source sont dopés. Leur dopage pourra être respectivement de type N ou P, ou inversement, selon le type de flux entre la source et le drain. Il comprend également classiquement une grille 24. La grille 24 est séparée de la source 21 et du drain 22 par un isolant 25 et comprend une surface sensible aux ions $H^+$. Dans ce mode de réalisation, la grille est réalisée en $Ta_2O_5$.

La sonde comprend également une électrode de référence 26, qui est reliée au contact grille de l'électronique de contrôle et permet de mesurer les variations de potentiels au contact de la grille 24. Elle comprend encore une anode 27 et une cathode 28.

Dans ce mode de réalisation, l'anode est en platine et la cathode est acier inoxydable. D'autres matériaux adaptés pourront également être utilisés.

L'anode 27 s'étend tout autour de la grille 24 sans être en contact avec celle-ci.

L'anode 27 ainsi que la grille 24 sont recouvertes d'une membrane 29 avec laquelle elles sont en contact. Cette membrane 29 est perméable aux ions $H^+$. Elle est réalisée en polymère comme par exemple du Poly(2-hydroxyethylmethacrylate), agarose, polyvinyle alcool (PVA)... Elle se présente préférentiellement sous la forme d'un gel. Son épaisseur est préférentiellement comprise entre 40 et 150 microns. Elle est de préférence solidarisée à l'anode et à la grille par des liaisons covalentes.

Cette membrane 29 ainsi que l'électrode de référence 26 et la cathode 28 sont prévues pour être mises en contact avec l'effluent E dont il est souhaité de mesurer le pH.

La sonde comprend des moyens de génération 30 d'une différence de potentiel électrique $V_{DS}$, comme un générateur de tension électrique, et d'un courant électrique $I_{DS}$, comme un générateur de courant électrique, qui sont connectés aux bornes de le source 21 et du drain 22 à l'aide de moyens de connexion prévus à cet effet. Ces moyens permettent d'appliquer une tension électrique $V_{DS}$ de valeur constante et un courant électrique $I_{DS}$ de valeur constant entre la source et le drain.

La sonde comprend des moyens de mesure d'une différence de potentiel électrique $V_{GS}$ entre la grille 24 et la source 21, comme par exemple un voltmètre 31. Dans ce mode de réalisation, ces moyens de mesure sont reliés à la source et à l'électrode de référence. Ils permettent de mesurer $V_{GS}$ dans la mesure où la gille et l'électrode de références sont toutes les deux en contact avec l'effluent à analyser.

Cette différence de potentiel varie en fonction du pH de la solution à analyser.

La sonde comprend des moyens de génération d'un courant électrique 32, comme un générateur de courant électrique, qui sont connectés aux bornes de l'anode 27 et de la cathode 28 à l'aide de moyens de connexion prévus à cet effet. Ces moyens de génération de courant permettent de générer un courant électrique constant entre l'anode et la cathode. Ce courant permet de générer une concentration fixe de protons proportionnelle au pH.

La sonde comprend des moyens de commande permettant d'agir sur les moyens de génération de courant 32 de façon à contrôler l'intensité du courant qu'ils délivrent. Les moyens de génération de courant 32 peuvent ainsi générer des courants constants de valeurs différentes pendant des durées déterminées.

L'application d'un courant électrique aux bornes de la cathode et de l'anode au moyen du générateur 32 permet de générer la production de protons H+ dans la membrane par oxydation de l'eau selon la formule :

$$H_2O => 2O_2 + 4H^+ + 4e-$$

et d'y modifier le pH. La concentration en protons [H+] générée est proportionnelle à l'intensité i du courant imposé entre l'anode et la cathode :

$$[H^+] = C_1.i$$

où $C_1$ est une constante, et i est l'intensité du courant imposé entre l'anode et la cathode.

De façon générale, la valeur de la constante $C_1$ peut être déterminée lors d'une première et deuxième étapes d'étalonnage initiales en usine. La première étape consiste à réaliser une calibration de la sonde à transistor ISFET avec des solutions de pH connues, sans générer de courant entre l'anode et la cathode. Dans une deuxième étape, différentes valeurs de courant sont appliquées entre l'anode et la cathode et le pH correspondant est mesuré au moyen de la sonde à transistor ISFET. Une courbe caractéristique reliant la valeur du pH mesuré et le courant généré est obtenue par régression linéaire. Elle permet d'établir la valeur $C_1$ nécessaire pour la calibration in situ, $C_1$ étant son coefficient directeur. La constante $C_1$ est ainsi déterminée lors de la fabrication de la sonde.

La sonde comprend des moyens de détermination de la valeur du pH de l'effluent en fonction de la valeur de la différence de potentiel électrique $V_{GS}$ mesurée aux bornes de la grille 24 et de la source 21.

La fonction reliant le pH à la tension $V_{GS}$ mesurée est :

$$V_{GS} = C_2.pH + E^0$$

où $C_{2\,et}\,E^0$ sont des constantes à déterminer.

Cette formule correspond à une généralisation de l'équation de Nernst :

$$V_{GS} = (-2,3\ RT/nF).pH + E^0$$

Avec :

$E^0$ : constante
R : constante des gaz
F : constante de Faraday
T : température en degré Kelvin
n : charge ionique

L'équation de Nernst donne des valeurs théoriques de la pente $C_2$ (de l'ordre de 59mV par unité pH) et de $E^0$ (ordonnée à l'origine qui dépend de la tension de seuil du transistor et peut varier d'un capteur à l'autre). Cependant $E_0$ et $C_2$ sont susceptibles de varier pour chaque sonde à transistor ISFET. Ces constantes doivent donc être déterminées précisément lors de la calibration initiale au cours de la fabrication de chaque sonde avec des solutions de pH connues.

Dans un mode de réalisation, la calibration initiale de la sonde comprend une première mesure de la tension $V_{GS}$, nommé $V_{GS1}$, dans une première solution à une première valeur de pH, $pH_1$, puis une deuxième mesure de la tension $V_{GS}$, nommé $V_{GS2}$, dans une deuxième solution à une deuxième valeur de pH, $pH_2$. Les valeurs des constantes $E_0$ et $C_2$ peuvent ensuite être calculées en appliquant les formules suivantes :

$$C_2 = (pH_1 - pH_2)/(V_{GS1} - V_{GS2})$$

$$E^0 = V_{GS1} - (pH_1 - pH_2)/(V_{GS1} - V_{GS2}).pH_1$$

Les moyens de commande et les moyens de détermination de la valeur du pH comprennent un microcontrôleur.

La sonde comprend des moyens de calibrage. Ces moyens de calibrage comprennent le microcontrôleur qui permet alternativement de mettre en œuvre des cycles de mesure de pH et des cycles de calibration de la sonde.

La courbe de pH de la sonde est de type $V_{GS} = C_2.pH + E^0$, $C_2$ étant le coefficient directeur et $E^0$ l'ordonnée à l'origine. Les valeurs de $E^0$ et $C_2$ varient au cours du temps du fait du vieillissement de la sonde.

Le calibrage in situ a pour but de corriger l'ordonnée à l'origine et/ou le coefficient directeur pour s'assurer que la valeur de pH mesurée au moyen de la sonde traduit bien la réalité.

Lors d'un cycle de calibration, le microcontrôleur est conçu pour :

- agir sur les moyens de génération de courant pour générer un courant d'intensité $I_1$ connue, au niveau de l'anode et de la cathode pendant une durée réglable $T_1$ variant de 1 minutes à 30 minutes afin de porter le pH à l'intérieur de la membrane à une valeur connue $pH_1$ ;
- agir, à la fin de la durée $T_1$ sur les moyens de génération de courant et de différence de potentiel pour générer un courant électrique constant $I_{DS}$ et une tension électrique $V_{DS}$ constante entre la source et le drain afin de polariser le transistor ;
- déclencher une mesure de la différence de potentiel $V_{GS1}$ entre la grille et la source ;
- calculer la valeur de l'ordonnée à l'origine $E^0$ en appliquant la formule $E^0 = V_{GS1} - C_2 pH_1$ ;
- remplacer la valeur en cours de $E_0$ par la valeur nouvellement calculée. Dans ce mode de réalisation, la valeur d'origine de la constante $C_2$ est conservée.

Dans un autre mode de réalisation de calibrage, le microcontrôleur est conçu pour :

- agir sur les moyens de génération de courant pour générer un premier courant d'intensité $I_1$ connue, au niveau de l'anode et de la cathode pendant une durée réglable $T_1$ variant de 1 minutes à 30 minutes afin de porter le pH à l'intérieur de la membrane à une première valeur connue $pH_1$ ;
- agir, à la fin de la durée $T_1$ sur les moyens de génération de courant et de différence de potentiel pour générer un courant électrique constant $I_{DS}$ et une tension électrique constante $V_{DS}$ entre la source et le drain afin de polariser le transistor ;
- déclencher une mesure de la différence de potentiel $V_{GS1}$ entre la grille et la source ;
- mémoriser les valeurs de $V_{GS1}$, $pH_1$ et $I_1$ ;
- agir sur les moyens de génération de courant pour générer un deuxième courant d'intensité $I_2$ connu, au niveau de l'anode et de la cathode pendant une durée réglable $T_2$ variant de 1 minutes à 30 minutes pour porter le pH à l'intérieur de la membrane à une deuxième valeur connue $pH_2$ ;
- agir, à la fin de la durée $T_2$, sur les moyens de génération de courant et de différence de potentiel pour générer un courant électrique constant $I_{DS}$ et une tension électrique constante $V_{DS}$ entre la source et le drain afin de polariser le transistor ;
- déclencher une mesure de la différence de potentiel électrique $V_{GS2}$ entre la grille et la source ;
- mémoriser les valeurs de $V_{GS2}$, $pH_2$ et $I_2$ ;
- calculer les valeurs du coefficient directeur $C_2$ et de l'ordonnée à l'origine $E^0$ et en appliquant les formules :

$$C_2 = (pH_1 - pH_2)/(V_{GS1} - V_{GS2})$$

$$E^0 = V_{GS1} - (pH_1 - pH_2)/(V_{GS1} - V_{GS2}).pH_1$$

- remplacer les valeurs en cours de $C_2$ et $E_0$ par les valeurs nouvellement calculées.

### 7.2.2. Fonctionnement

### A. Mesure du pH

Afin de mesurer la valeur du pH d'un effluent E, celui-ci est mis en contact avec l'électrode de référence 26 et avec la membrane 29 (donc avec la grille et l'anode), et avec la cathode.

Le microcontrôleur pilote la sonde de sorte qu'aucun courant n'est délivré au niveau de l'anode et de la cathode.

Les ions $H^+$ contenus par l'effluent E diffusent alors à l'intérieur de la membrane 29 de façon qu'un équilibre de concentration soit obtenu entre l'intérieur et l'extérieur de la membrane 29, c'est-à-dire l'effluent, pour lequel la mesure est effectuée. La concentration en ion $H^+$ dans la membrane 29 est donc identique à celle de l'effluent E.

Le microcontrôleur agit sur les moyens de génération de courant électrique et de différence de potentiel électrique pour générer une différence de potentiel électrique $V_{DS}$ constante ainsi que la circulation d'un courant électrique $I_{DS}$ constant entre la source 21 et le drain 22. Les valeurs de ce courant électrique et de cette tension électrique seront choisies de manière telle qu'elles permettent la polarisation du transistor.

La génération d'une différence de potentiel électrique est alors observée entre la 21 et l'électrode de référence 26. Cette différence de potentiel électrique est la tension $V_{GS}$ du transistor IFSET entre la grille et la source. La valeur de cette différence de potentiel $V_{GS}$ est proportionnelle à la valeur du pH de l'effluent E. Cette tension varie linéairement en fonction du pH pour un courant $I_{DS}$ et une tension $V_{DS}$ constants. Le microcontrôleur enregistre cette différence de potentiel $V_{GS}$.

Le microcontrôleur détermine ensuite la valeur du pH de l'effluent E en fonction de la valeur de la tension électrique $V_{GS}$ mesurée aux bornes de la source 21 et de la grille 24 en appliquant par exemple la formule :

$$V_{GS} = C_2.pH + E^0.$$

## B. Calibrage

Afin d'éviter l'apparition d'une dérive entre la valeur de pH mesurée au moyen de la sonde et la valeur réelle du pH de l'effluent, des phases de calibrage ou de réétalonnage de la sonde sont mises en œuvre de manière régulière, préférentiellement quotidiennement.

Selon un premier mode de réalisation, lors d'un cycle de calibration, le microcontrôleur agit sur les moyens de génération de courant pour générer un courant d'intensité $I_1$ connue, au niveau de l'anode et de la cathode, pendant une durée réglable $T_1$ variant de 1 minutes à 30 minutes en fonction du temps nécessaire à la mise à l'équilibre de la concentration en ions $H^+$ dans la membrane. Cette durée est paramétrée en usine. Cette intensité de courant $I_1$ permet de générer la production de protons pendant la durée $T_1$ et ainsi de porter le pH dans la membrane à une valeur connue $pH_1$. Les ions $H^+$ générés sont en quantité très supérieure aux protons présents dans l'effluent (loi en log) ce qui permet de négliger l'influence du pH de l'eau à l'extérieur de la membrane pour la calibration.

A la fin de la durée $T_1$ le microcontrôleur agit sur les moyens de génération de courant et de différence de potentiel pour générer un courant électrique constant $I_{DS}$ et une tension électrique $V_{DS}$ constante entre le source et le drain : le transistor est alors polarisé.

Le microcontrôleur déclenche ensuite une mesure de la différence de potentiel $V_{GS1}$ entre la grille et la source. Puis, il calcule la valeur de l'ordonnée à l'origine $E^0$ en appliquant la formule $E^0 = V_{GS1} - C_2 pH_1$. Il remplace enfin la valeur en cours de $E_0$ par la valeur nouvellement calculée dans la formule $V_{GS} = C_2.pH + E^0$.

Dans un autre mode de réalisation de calibrage, le microcontrôleur agit sur les moyens de génération de courant pour générer un premier courant d'intensité $I_1$ connue, au niveau de l'anode et de la cathode, pendant une durée réglable $T_1$ variant de 1 minutes à 30 minutes en fonction du temps nécessaire à la mise à l'équilibre de la concentration en ions $H^+$ dans la membrane. Cette durée est paramétrée en usine. Cette intensité de courant $I_1$ permet de générer la production de protons pendant la durée $T_1$ et ainsi de porter le pH dans la membrane à une valeur connue $pH_1$.

A la fin de la durée $T_1$, le microcontrôleur agit sur les moyens de génération de courant et de différence de potentiel pour générer un courant électrique constant $I_{DS}$ et une tension électrique constante $V_{DS}$ entre la source et le drain : le transistor est alors polarisé.

Le microcontrôleur déclenche ensuite une mesure de la différence de potentiel $V_{GS1}$ entre la grille et la source, et mémorise les valeurs de $V_{GS1}$, $pH_1$ et $I_1$.

Le microcontrôleur agit ensuite de nouveau sur les moyens de génération de courant pour générer un deuxième courant d'intensité $I_2$ connu, au niveau de l'anode et de la cathode pendant une durée réglable $T_2$ variant de 1 minutes à 30 minutes pour porter le pH à l'intérieur de la membrane à une deuxième valeur connue $pH_2$.

A la fin de la durée $T_2$, le microcontrôleur agit de nouveau sur les moyens de génération de courant et de différence de potentiel pour générer un courant électrique constant $I_{DS}$ et une tension électrique constante $V_{DS}$ entre la source et le drain afin de polariser le transistor.

Le microcontrôleur déclenche ensuite une mesure de la différence de potentiel électrique $V_{GS2}$ entre la grille et la source, et mémorise les valeurs de $V_{GS2}$, $pH_2$ et $I_2$.

Le microcontrôleur calcule alors les valeurs du coefficient directeur $C_2$ et de l'ordonnée à l'origine $E^0$ en appliquant les formules :

$$C_2 = (pH_1 - pH_2)/(V_{GS1} - V_{GS2})$$

$$E^0 = V_{GS1} - (pH_1 - pH_2)/(V_{GS1} - V_{GS2}).pH_1$$

Il remplace enfin les valeurs en cours de $C_2$ et $E^0$ par les valeurs nouvellement calculées dans la formule $V_{GS} = C_2.pH + E^0$.

**7.3. Essais**

Des essais ont été réalisés pour vérifier l'efficacité d'une sonde selon l'invention.
Ces essais ont consistés à mesurer la valeur du pH d'un effluent avec une sonde à électrode de verre classique puis avec une sonde selon l'invention.

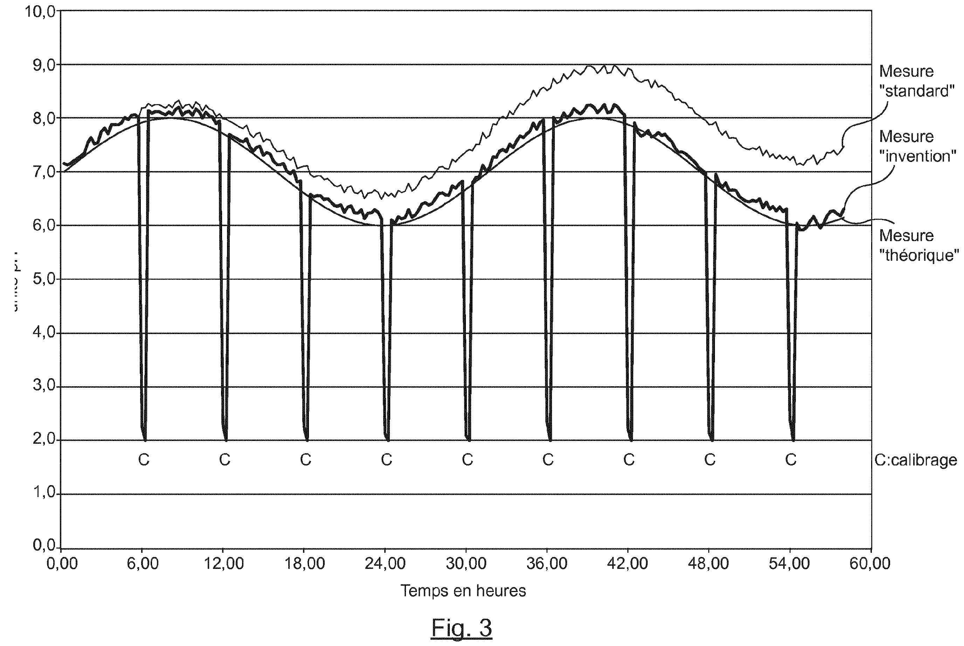

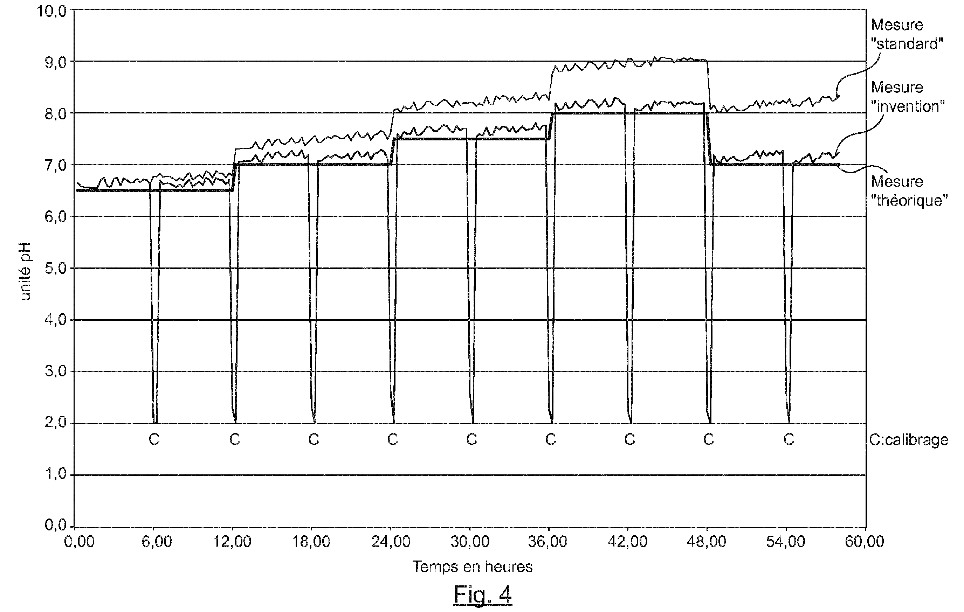

Les figures 3 et 4 illustrent :

- la variation réelle du pH d'un effluent : Valeur théorique ;
- la variation de la valeur de pH mesurée au moyen d'une sonde selon l'art antérieur : Mesures standard ;
- la variation de la valeur de pH mesurée au moyen d'une sonde selon l'invention : Mesures invention.

Ainsi que cela apparaît sur ces figures, en réalisant une étape de calibration toutes les six heures, la dérive entre la valeur réelle du pH et la valeur du pH mesurée au moyen d'une sonde selon l'invention est quasiment nulle ou à tout le moins nettement plus faible que la dérive observée entre la valeur réelle du pH et la valeur de pH mesurée au moyen d'une sonde selon l'art antérieur.

**7.4. Variante**

Dans une variante, la membrane pourra ne pas être mise en œuvre. Dans ce cas, la génération d'un courant au niveau de l'anode et de la cathode permettra de modifier la valeur du pH de l'effluent de façon contrôlée à proximité de la grille. Pour le reste, la structure et le fonctionnement de la sonde selon cette variante sont identiques à ceux de la sonde comprenant la membrane.
Dans une variante, l'électrode de référence de la sonde pourra être remplacée par un transistor de type MOSFET (pour « Métal/Oxyde/Semi-conducteur Field Effect Transistor » en langue anglaise soit transistor à effet de champs à semi-conducteur métal oxyde). Dans ce cas, la grille du MOSFET est reliée électriquement à la grille de l'ISFET et un courant et une tension constants sont appliqués entre la source et le drain du MOSFET pour le polariser. La mesure de la tension aux bornes de la grille du MOSFET et de celle de l'ISFET, qui est proportionnelle au pH de la solution à analyser, permet de déduire le pH de celle-ci.
Dans d'autres variantes, l'électrode de référence pourra être constituée d'une pseudo électrode de référence en fil d'argent chlorure d'argent, fil d'or...

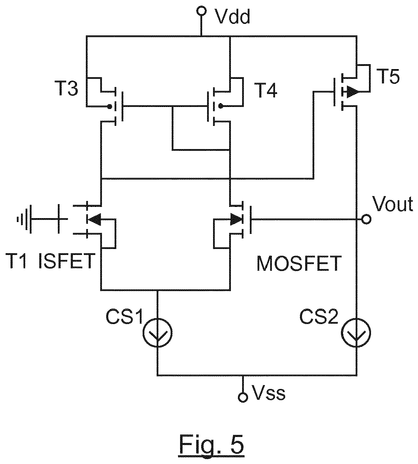

La figure 5 illustre un exemple de schéma électronique du raccordement des transistors MOSFET et ISFET d'une sonde selon cette variante.
Dans cet exemple, une cascade différentielle est mise en œuvre. Celle-ci contient le transistor T5 branché en contre réaction. Les transistors T3 et T4 sont la charge active du MOSFET et de l'ISFET qui assure l'égalité de drain dans ces deux transistors. Le transistor T5 (identique à T3 et T4) pilote la tension de grille du MOSFET. Le type de conductibilité du canal des transistors T3, T4, T5 est opposé à celui de l'ISFET et du MOSFET. Pour assurer légalité des tensions drain-source $V_{DS}$ des MOSFET et ISFET, il faut que la condition $I_{CS2} = 0,5 . I_{CS1}$.
Ainsi, si le potentiel de la grille $V_{G1}$ de l'ISFET augmente, le potentiel sur la source $V_{S1}$ devra augmenter puisque le courant drain-source $I_{DS1}$ et le potentiel sur le drain $V_{D1}$ sont fixés par l'ensemble des transistors T3, T4, T5. De manière identique, l'augmentation du potentiel sur la source ($V_{S1} = V_{S2}$) va entraîner l'augmentation du potentiel sur la grille $V_{G2}$ du MOSFET et donc de la tension de sortie $V_{out}$. Le potentiel est mesuré par rapport à la masse du circuit. Il correspond à la différence de potentiel entre les grilles du MOSFET et de l'ISFET qui est proportionnel au pH de la solution.
Dans ce mode de réalisation, seules l'anode et la grille de l'ISFET sont mises en contact avec l'effluent à analyser.

**Revendications**

1. Dispositif de mesure du pH d'un effluent (E), ledit dispositif comprenant des moyens de mesure d'une information représentative du pH dudit effluent (E) destinés à être mis en contact avec ledit effluent (E), et des moyens de modification de la valeur du pH dudit effluent (E) à proximité desdits moyens de mesure, lesdits moyens de mesure comprenant un transistor de type ISFET comprenant une source (21), un drain (22), une grille (24) avec une surface sensible aux ions $H^+$ et destinée à être mise en contact avec ledit effluent, lesdits moyens de modification de la valeur du pH comprenant une anode (27) et une cathode (28) et des premiers moyens de génération d'un courant électrique entre ladite anode (27) et ladite cathode (28), ledit dispositif comprenant une membrane perméable aux ions $H^+$, ladite membrane (29) ayant une surface interne recouvrant et étant en contact avec ladite anode (27) et ladite grille (24), et une surface externe,
ladite cathode (28) et ladite surface externe de ladite membrane (29) étant destinée à être mises en contact avec ledit effluent (E),
ledit dispositif comprenant des moyens de calibrage dudit dispositif de mesure, lesdits moyens de calibrage étant configurés pour calibrer le dispositif de mesure après modification dudit pH à l'intérieur de ladite membrane (29) à au moins une valeur connue $pH_1$ par lesdits moyens de modification.

2. Dispositif selon la revendication 1, **caractérisé en ce que** lesdits moyens de mesure comprennent :

   - une électrode de référence (26) ;
   - des moyens de génération (30) d'une différence de potentiel électrique constante aux bornes de ladite source (21) et dudit drain (22) ;
   - des deuxième moyens de génération (30) d'un courant électrique constant entre ladite source (21) et ledit drain (22) ;
   - des moyens de mesure (31) d'une différence de potentiel électrique de contrôle $V_{GS}$ aux bornes de ladite source (21) et de ladite électrode de référence (26),
   - des moyens de détermination de la valeur du pH dudit effluent en fonction de la valeur de ladite différence de potentiel électrique de contrôle $V_{GS}$, la valeur de la différence de potentiel électrique de contrôle $V_{GS}$ et la valeur du pH étant liées par une formule du type : $V_{GS} = C_2 \cdot pH + E^0$, où $E^0$ et $C_2$ sont des constantes prédéfinies ;

   et **en ce que** lesdits moyens de calibrage sont configurés pour mettre en œuvre des étapes de calibrage durant lesquelles :

   - ils agissent sur lesdits moyens de modification de la valeur du pH pour la porter momentanément à au moins une première valeur connue $pH_1$, puis
   - ils agissent sur lesdits moyens de mesure (31) d'une différence de potentiel électrique de contrôle $V_{GS}$, pour en mesurer la valeur $V_{GS1}$ correspondante ;
   - ils calculent la valeur de la constante $E^0$ en fonction des valeurs de $pH_1$ et de $V_{GS1}$.

3. Dispositif selon la revendication 2, **caractérisé en ce que** lesdits moyens de calibrage sont configurés pour mettre en œuvre des étapes de calibrage durant lesquelles :

   - ils agissent sur lesdits moyens de modification de la valeur du pH pour la porter momentanément à une première valeur connue $pH_1$, puis
   - ils agissent sur lesdits moyens de mesure (31) d'une différence de potentiel électrique de contrôle $V_{GS}$, pour mesurer la valeur $V_{GS1}$ correspondant à la première valeur $pH_1$;
   - ils agissent sur lesdits moyens de modification de la valeur du pH pour la porter momentanément à une deuxième valeur connue $pH_2$, puis
   - ils agissent sur lesdits moyens de mesure (31) d'une différence de potentiel électrique de contrôle $V_{GS}$, pour mesurer la valeur $V_{GS2}$ correspondant à la deuxième valeur $pH_2$ ;
   - ils calculent la valeur desdites constantes $E^0$, $C_2$ en fonction des valeurs commues de $pH_1$, $pH_2$, $V_{GS1}$ et de $V_{GS2}$.

4. Dispositif selon l'une quelconque des revendications 1 à 3, **caractérisé en ce que** lesdits moyens de modification du pH comprennent des moyens de commande pour mettre en œuvre ou non lesdits premiers moyens (32) de génération d'un courant électrique.

5. Dispositif selon la revendication 4, **caractérisé en ce que** lesdits moyens de calibrage sont configurés pour agir sur lesdits moyens de commande pour mettre en œuvre lesdits premiers moyens (32) de génération d'un courant électrique pour modifier la valeur du pH pendant lesdites étapes de calibrage.

6. Dispositif selon la revendication 5, **caractérisé en ce que** ladite membrane (29) recouvre ladite grille (24) et ladite anode (27), ladite grille (24) et ladite anode (27) étant en contact avec ladite membrane (29).

7. Dispositif selon l'une quelconque des revendications 1 à 6, **caractérisé en ce que** ladite membrane (29) est en polymère.

8. Dispositif selon la revendication 7, **caractérisé en ce que** ledit polymère est du poly(2-hyroxyéthylméthacrylate).

9. Procédé de mesure du pH d'un effluent au moyen d'un dispositif selon l'une quelconque des revendications 1 à 8, **caractérisé en ce qu'**il comprend :

   - une étape de mesure du pH avec lesdits moyens de mesure ;
   - une étape de calibrage comprenant au moins une étape de modification dudit pH dudit effluent à au moins une valeur connue $pH_1$ à l'intérieur de ladite membrane par lesdits moyens de modification, et une étape de calibrage dudit dispositif de mesure par lesdits moyens de calibrage.

10. Procédé selon la revendication 9, **caractérisé en ce que** ladite étape de mesure du pH comprend :

    - une étape de génération d'une différence de potentiel électrique constante aux bornes de ladite source (21) et dudit drain (22) ;
    - une étape de génération d'un courant électrique constant aux bornes de ladite source (21) et dudit drain (22) ;
    - une étape de mesure d'une différence de potentiel électrique de contrôle $V_{GS}$ aux bornes de ladite source (21) et d'une électrode de référence (26) comprise dans lesdits moyens de mesure ;
    - une étape de détermination de la valeur dudit pH en fonction de la valeur de ladite différence de potentiel électrique de contrôle $V_{GS}$, la valeur de la différence de potentiel électrique de contrôle $V_{GS}$ et la valeur du pH étant liés par une formule du type : $V_{GS} = C_2 \cdot pH + E^0$, où $E^0$ et $C_2$ sont des constantes prédéfinies ;

    et **en ce que** ladite étape de calibrage comprend au moins :

    - une étape de modification dudit pH par lesdits moyens de modification de la valeur du pH pour la porter momentanément à une première valeur connue $pH_1$, puis
    - une étape de mesure de la différence de potentiel électrique de contrôle correspondant $V_{GS1}$ par lesdits moyens de mesure (31) d'une différence de potentiel électrique de contrôle ;
    - une étape de calcul par lesdits moyens de calibrage de ladite constante $E^0$ en fonction des valeurs connue $pH_1$ et de $V_{GS1}$.

11. Procédé selon la revendication 10, **caractérisé en ce que** ladite étape de calibrage comprend :

    - une étape de modification dudit pH par lesdits moyens de modification de la valeur du pH pour la porter momentanément à une première valeur connue $pH_1$, puis
    - une étape de mesure de la différence de potentiel électrique de contrôle $V_{GS1}$ par lesdits moyens de mesure (31) d'une différence de potentiel électrique de contrôle $V_{GS}$, pour mesurer la valeur $V_{GS1}$ correspondant à la première valeur $pH_1$, puis
    - une étape de modification dudit pH par lesdits moyens de modification de la valeur du pH pour la porter momentanément à une deuxième valeur connue $pH_2$, puis
    - une étape de mesure de la différence de potentiel électrique de contrôle $V_{GS2}$ par lesdits moyens de mesure (31) d'une différence de potentiel électrique de contrôle $V_{GS}$, pour mesurer la valeur $V_{GS2}$ correspondant à la deuxième valeur $pH_2$ ;
    - une étape de calcul par lesdits moyens de calibrage de la valeur desdites constantes $E^0$, $C_2$ en fonction des valeurs commues de $pH_1$, $pH_2$, $V_{GS1}$ et de $V_{GS2}$.

12. Procédé selon la revendication 10 ou 11, **caractérisé en ce que** ladite ou lesdites étapes de modification dudit pH comprennent une étape de mise en œuvre desdits premiers moyens (32) de génération d'un courant électrique.

13. Procédé selon l'une quelconque des revendications 9 à 12, **caractérisé en ce que** ladite étape de calibrage est mise en œuvre selon une fréquence prédéterminée.

**Patentansprüche**

1. Vorrichtung zum Messen des pH-Werts eines Effluats (E), wobei die Vorrichtung Mittel zum Messen einer für den pH-Wert des Effluats (E) repräsentativen Information, die dazu bestimmt sind, mit dem Effluat (E) in Kontakt gebracht zu werden, und Mittel zum Modifizieren des pH-Werts des Effluats (E) in Nähe der Messmittel umfasst, wobei die Messmittel einen Transistor vom Typ ISFET umfasst, der eine Quelle (21), eine Senke (22), ein Gatter (24) mit einer Fläche umfasst, die für die $H^+$-Ionen empfindlich und dazu bestimmt ist, mit dem Effluat in Kontakt gebracht zu werden,
   wobei die Mittel zum Modifizieren des pH-Werts eine Anode (27) und eine Kathode (28) und erste Mittel zum Erzeugen eines elektrischen Stroms zwischen der Anode (27) und der Kathode (28) umfassen,
   wobei die Vorrichtung eine Membran umfasst, die für die $H^+$-Ionen durchlässig ist,
   wobei die Membran (29) eine Innenfläche, die die Anode (27) und das Gatter (24) bedeckt und sich mit denselben in Kontakt befindet, und eine Außenfläche aufweist,
   wobei die Kathode (28) und die Außenfläche der Membran (29) dazu bestimmt sind, mit dem Effluat (E) in Kontakt gebracht zu werden,
   wobei die Vorrichtung Mittel zum Kalibrieren der Messvorrichtung umfasst, wobei die Kalibriermittel dafür konfiguriert sind, die Messvorrichtung nach Modifikation des pH-Werts im Inneren der Membran (29) durch die Modifikationsmittel auf mindestens einen bekannten Wert $pH_1$ zu kalibrieren.

2. Vorrichtung nach Anspruch 1, **dadurch gekennzeichnet, dass** die Messmittel umfassen:

   - eine Referenzelektrode (26);
   - Mittel zum Erzeugen (30) einer konstanten elektrischen Potentialdifferenz an den Klemmen der Quelle (21) und der Senke (22);
   - zweite Mittel zum Erzeugen (30) eines konstanten elektrischen Stroms zwischen der Quelle (21) und der Senke (22);
   - Mittel zum Messen (31) einer elektrischen Prüf-Potentialdifferenz $V_{GS}$ an den Klemmen der Quelle (21) und der Referenzelektrode (26),
   - Mittel zum Bestimmen des pH-Werts des Effluats in Abhängigkeit vom Wert der elektrischen Prüf-Potentialdifferenz $V_{GS}$, wobei der Wert der elektrischen Prüf-Potentialdifferenz $V_{GS}$ und der pH-Wert über eine Formel des Typs: $V_{GS} = C_2 \cdot pH + E^0$ verknüpft sind, wobei es sich bei $E^0$ und $C_2$ um vordefinierte Konstanten handelt;

   und dadurch, dass die Kalibriermittel dafür konfiguriert sind, Kalibrierschritte umzusetzen, während denen:

   - sie auf die Mittel zum Modifizieren des pH-Werts einwirken, um denselben momentan auf mindestens einen ersten bekannten Wert $pH_1$ zu bringen, anschließend
   - sie auf die Mittel zum Messen (31) einer elektrischen Prüf-Potentialdifferenz $V_{GS}$ einwirken, um den entsprechenden Wert $V_{GS1}$ zu messen;
   - sie den Wert der Konstante $E^0$ in Abhängigkeit von den Werten von $pH_1$ und $V_{GS1}$ berechnen.

3. Vorrichtung nach Anspruch 2, **dadurch gekennzeichnet, dass** die Kalibriermittel dafür konfiguriert sind, Kalibrierschritte umzusetzen, während denen:

   - sie auf die Mittel zum Modifizieren des pH-Werts einwirken, um denselben momentan auf einen ersten bekannten Wert $pH_1$ zu bringen, anschließend
   - sie auf die Mittel zum Messen (31) einer elektrischen Prüf-Potentialdifferenz $V_{GS}$ einwirken, um den Wert $V_{GS1}$ zu messen, der dem ersten Wert $pH_1$ entspricht;
   - sie auf die Mittel zum Modifizieren des pH-Werts einwirken, um denselben momentan auf einen zweiten bekannten Wert $pH_2$ zu bringen, anschließend
   - sie auf die Mittel zum Messen (31) einer elektrischen Prüf-Potentialdifferenz $V_{GS}$ einwirken, um den Wert $V_{GS2}$ zu messen, der dem zweiten Wert $pH_2$ entspricht;
   - sie den Wert der Konstanten $E^0$, $C_2$ in Abhängigkeit von den bekannten Werten $pH_1$, $pH_2$, $V_{GS1}$ und $V_{GS2}$ berechnen.

4. Vorrichtung nach einem der Ansprüche 1 bis 3, **dadurch gekennzeichnet, dass** die Mittel zum Modifizieren des pH-Werts Steuermittel umfassen, um die ersten Mittel (32) zum Erzeugen eines elektrischen Stroms einzusetzen oder nicht.

**5.** Vorrichtung nach Anspruch 4, **dadurch gekennzeichnet, dass** die Kalibriermittel dafür konfiguriert sind, auf die Steuermittel einzuwirken, um die ersten Mittel (32) zum Erzeugen eines elektrischen Stroms einzusetzen, um während der Kalibrierschritte den pH-Wert zu modifizieren.

**6.** Vorrichtung nach Anspruch 5, **dadurch gekennzeichnet, dass** die Membran (29) das Gatter (24) und die Anode (27) bedeckt, wobei sich das Gatter (24) und die Anode (27) mit der Membran (29) in Kontakt befinden.

**7.** Vorrichtung nach einem der Ansprüche 1 bis 6, **dadurch gekennzeichnet, dass** die Membran (29) aus Polymer ist.

**8.** Vorrichtung nach Anspruch 7, **dadurch gekennzeichnet, dass** es sich bei dem Polymer um Poly(2-hydroxyethylmethacrylat) handelt.

**9.** Verfahren zum Messen des pH-Werts eines Effluats mittels einer Vorrichtung nach einem der Ansprüche 1 bis 8, **dadurch gekennzeichnet, dass** es umfasst:

- einen Schritt des Messens des pH-Werts mit den Messmitteln;
- einen Schritt des Kalibrierens, der mindestens einen Schritt des Modifizierens des pH-Werts des Effluats auf mindestens einen bekannten Wert $pH_1$ im Inneren der Membran durch die Modifikationsmittel, und einen Schritt des Kalibrierens der Messvorrichtung durch die Kalibriermittel umfasst.

**10.** Verfahren nach Anspruch 9, **dadurch gekennzeichnet, dass** der Schritt des Messens des pH-Werts umfasst:

- einen Schritt des Erzeugens einer konstanten elektrischen Potentialdifferenz an den Klemmen der Quelle (21) und der Senke (22);
- einen Schritt des Erzeugens eines konstanten elektrischen Stroms an den Klemmen der Quelle (21) und der Senke (22);
- einen Schritt des Messens einer elektrischen Prüf-Potentialdifferenz $V_{Gs}$ an den Klemmen der Quelle (21) und einer Referenzelektrode (26), die in den Messmitteln umfasst ist;
- einen Schritt des Bestimmens des pH-Werts in Abhängigkeit vom Wert der elektrischen Prüf-Potentialdifferenz $V_{GS}$, wobei der Wert der elektrischen Prüf-Potentialdifferenz $V_{GS}$ und der pH-Wert über eine Formel des Typs: $V_{GS} = C_2 \cdot pH + E^0$ verknüpft sind, wobei es sich bei $E^0$ und $C_2$ um vordefinierte Konstanten handelt;

und dadurch, dass der Kalibrierschritt mindestens umfasst:

- einen Schritt des Modifizierens des pH-Werts durch die Mittel zum Modifizieren des pH-Werts, um denselben momentan auf einen ersten bekannten Wert $pH_1$ zu bringen, anschließend
- einen Schritt des Messens der entsprechenden elektrischen Prüf-Potentialdifferenz $V_{GS1}$ durch die Mittel zum Messen (31) einer elektrischen Prüf-Potentialdifferenz;
- einen Schritt des Berechnens der Konstante $E^0$ in Abhängigkeit von dem bekannten Wert $pH_1$ und von $V_{GS1}$ durch die Kalibriermittel.

**11.** Verfahren nach Anspruch 10, **dadurch gekennzeichnet, dass** der Kalibrierschritt umfasst:

- einen Schritt des Modifizierens des pH-Werts durch die Mittel zum Modifizieren des pH-Werts, um denselben momentan auf einen ersten bekannten Wert $pH_1$ zu bringen, anschließend
- einen Schritt des Messens der elektrischen Prüf-Potentialdifferenz $V_{GS1}$ durch die Mittel zum Messen (31) einer elektrischen Prüf-Potentialdifferenz $V_{GS}$, um den Wert $V_{GS1}$ zu messen, der dem ersten Wert $pH_1$ entspricht, anschließend
- einen Schritt des Modifizierens des pH-Werts durch die Mittel zum Modifizieren des pH-Werts, um denselben momentan auf einen zweiten bekannten Wert $pH_2$ zu bringen, anschließend
- einen Schritt des Messens der elektrischen Prüf-Potentialdifferenz $V_{GS2}$ durch die Mittel zum Messen (31) einer elektrischen Prüf-Potentialdifferenz $V_{GS}$, um den Wert $V_{GS2}$ zu messen, der dem zweiten Wert $pH_2$ entspricht;
- einen Schritt des Berechnens des Werts der Konstanten $E^0$, $C_2$ in Abhängigkeit von den bekannten Werten $pH_1$, $pH_2$, $V_{GS1}$ und von $V_{GS2}$ durch die Kalibriermittel.

**12.** Verfahren nach Anspruch 10 oder 11, **dadurch gekennzeichnet, dass** der oder die Schritte des Modifizierens des pH-Werts einen Schritt des Einsetzens der ersten Mittel (32) zum Erzeugen eines elektrischen Stroms umfassen.

**13.** Verfahren nach einem der Ansprüche 9 bis 12, **dadurch gekennzeichnet, dass** der Kalibrierschritt mit einer vorbestimmten Frequenz umgesetzt wird.

**Claims**

**1.** Device for measuring the pH of an effluent (E), said device comprising means for measuring a piece of information representing the pH of said effluent (E) that are to be put into contact with said effluent (E), and means for modifying the value of the pH of said effluent (E) in proximity to said means for measuring, said means for measuring comprise an ISFET type transistor comprising a source (21), a drain (22), a gate (24) with a surface sensitive to the $H^+$ ions and that is to be put into contact with said effluent,
said means for modifying the value of the pH comprising an anode (27) and a cathode (28) and first means for generating electric current between said anode (27) and said cathode (28),
said device comprising a membrane permeable to the $H^+$ ions, said membrane (29) having an inner surface covering and being in contact with said anode (27) and said gate (24), and an outer surface,
said cathode (28) and said outer surface of said membrane (29) being to be put into contact with said effluent (E),
said device comprising means for calibrating said device for measuring, said means for calibrating being configured to calibrate the device for measuring after modification of said pH in the interior of said membrane (29) to at least one known value $pH_1$ by said means for modifying.

**2.** Device according to claim 1, **characterized in that** said means for measuring comprise:

- a reference electrode (26);
- means (30) for generating a constant voltage at the terminals of said source (21) and said drain (22);
- second means (30) for generating a constant electric current between said source (21) and said drain (22);
- means (31) for measuring a control voltage $V_{GS}$ at the terminals of said source (21) and said reference electrode (26),
- means for determining the value of the pH of said effluent as a function of the value of said control voltage $V_{GS}$, the value of the control voltage $V_{GS}$ and the value of the pH being related by a formula of the type:
$V_{GS} = C_2 \cdot pH + E^0$, where $E^0$ and $C_2$ are predefined constants;

and **in that** said means for calibrating are configured to implement steps of calibration during which:

- they act on said means for modifying the value of the pH to take it momentarily to at least one first known value $pH_1$, then
- they act on said means (31) for measuring a control voltage $V_{GS}$, to measure its corresponding value $V_{GS1}$;
- they compute the value of the constant $E^0$ according to the values of $pH_1$ and of $V_{GS1}$.

**3.** Device according to claim 2, **characterized in that** said means for calibrating are configured to implement steps of calibration during which :

- they act on said means for modifying the value of the pH to take it momentarily to a first known value $pH_1$, then
- they act on said means (31) for measuring a control voltage $V_{GS}$, to measure the value $V_{GS1}$ corresponding to the first value $pH_1$ ;
- they act on said means for modifying the value of the pH to take it momentarily to a second known value $pH_2$, then
- they act on said means (31) for measuring a control voltage $V_{GS}$, to measure the value $V_{GS2}$ corresponding to the second value $pH_2$ ;
- they compute the value of said constants $E^0$, $C_2$ according to the known values of $pH_1$, $pH_2$, $V_{GS1}$ and $V_{GS2}$.

**4.** Device according to any one of claims 1 to 3, **characterized in that** said means for modifying the pH comprise command means to implement or not implement said first means (32) for generating an electric current.

**5.** Device according to claim 4, **characterized in that** said means for calibrating are configured to act on said command means to implement said first means (32) for generating an electric current to modify the value of the pH during said steps of calibration.

**6.** Device according to claim 5, **characterized in that** said membrane (29) covers said gate (24) and said anode (27), said gate (24) and said anode (27) being in contact with said membrane (29).

7. Device according to any one of the claims 1 to 6, **characterized in that** said membrane (29) is made of polymer.

8. Device according to claim 7, **characterized in that** said polymer is poly(2-hydroxyethylmethacrylate).

9. Method for measuring the pH of an effluent by means of a device according to any one of the claims 1 to 8, **characterized in that** it comprises:

- a step for measuring the pH with said means for measuring;
- a step for calibrating comprising at least one step for modifying said pH of said effluent to at least one known value $pH_1$ in the interior of said membrane by said means for modifying, and a step for calibrating said device for measuring by said means for calibrating.

10. Method according to claim 9, **characterized in that** said step for measuring the pH comprises:

- a step for generating a constant voltage at the terminals of said source (21) et said drain (22);
- a step for generating a constant electric current at the terminals of said source (21) et said drain (22);
- a step for measuring a control voltage $V_{GS}$ at the terminals of said source (21) and said reference electrode (26) comprised in said means for measuring;
- a step for determining the value of said pH as a function of the value of the control voltage $V_{GS}$, the value of the control voltage $V_{GS}$ and the value of the pH being related by a formula of the type:
$V_{GS} = C_2 . pH + E^0$, where $E^0$ and $C_2$ are predefined constants;

and **in that** said step for calibrating comprises at least:

- a step for modifying said pH by said means for modifying the value of the pH to take it momentarily to a first known value $pH_1$, then
- a step for measuring the corresponding control voltage $V_{GS1}$ by said means (31) for measuring a control voltage;
- a step of computation by said means for calibrating of said constant $E^0$ as a function of the known values $pH_1$ and $V_{GS1}$.

11. Method according to claim 10, **characterized in that** said step for calibrating comprises:

- a step for modifying said pH by said means for modifying the value of the pH to take it momentarily to a first known value $pH_1$, then
- a step for measuring the control voltage $V_{GS1}$ by said means (31) for measuring a control voltage $V_{GS}$, to measure the value $V_{GS1}$ corresponding to the first value $pH_1$, then
- a step for modifying said pH by said means for modifying the value of the pH to take it momentarily to a second known value $pH_2$, then
- a step for measuring the control voltage $V_{GS2}$ by said means (31) for measuring a control voltage $V_{GS}$ to measure the value $V_{GS2}$ corresponding to the second value $pH_2$;
- a step of computation by said means for calibrating of the value of said constants $E^0$, $C_2$ as a function of the known values of $pH_1$, $pH_2$, $V_{GS1}$ and of $V_{GS2}$.

12. Method according to claim 10 or 11, **characterized in that** said step or steps for modifying said pH comprise a step for implementing said first means (32) for generating an electrical current.

13. Method according to any one of the claims 9 to 12, **characterized in that** said step for calibrating is implemented at a predetermined frequency.

Fig. 1

Fig. 2

Fig. 3

EP 2 956 764 B1

EP 2 956 764 B1

Fig. 4

## Fig. 5

## RÉFÉRENCES CITÉES DANS LA DESCRIPTION

**Documents brevets cités dans la description**

- US 5016201 A